# EUROPEAN PATENT SPECIFICATION

(11) **EP 4 185 133 B1**
(45) Date of publication and mention of the grant of the patent: **17.07.2024**
(21) Application number: 21740080.3
(22) Date of filing: 08.07.2021
(51) Int. Cl.: A23N 12/08, A23F 5/04, A23N 12/12

(54) **COFFEE BEANS ROASTING APPARATUS**
VORRICHTUNG ZUM RÖSTEN VON KAFFEEBOHNEN
APPAREIL DE TORRÉFACTION DE GRAINS DE CAFÉ

(30) Priority: 24.07.2020 EP 20187641
(43) Date of publication of application: 31.05.2023
(73) Proprietor: Société des Produits Nestlé S.A., 1800 Vevey (CH)
(72) Inventor: DUBIEF, Flavien,Florent, 1424 CHAMPAGNE (CH)
(74) Representative: Ducreux, Marie
(86) International application number: PCT/EP2021/069064
(87) International publication number: WO 2022/017823

(56) References cited:
- EP-A1- 3 549 456
- WO-A2-2012/059484
- US-A- 3 329 506
- US-A- 4 698 916

## Description

### Field of the invention

The present invention relates to a coffee beans roasting apparatus.

### Background of the invention

Roasting of coffee beans at small scale that is at home or in shops and cafes is usually implemented with small sized apparatuses wherein coffee beans are agitated inside hot air.

WO 2012059484, WO 2018105163, WO2018185453 describe a small roasting apparatus comprising a roasting chamber and provided with hot air at different flows either to roast beans or to evacuate roasted beans.

The green beans are introduced manually by dosing them in a dosing chamber and then opening an outlet from the dosing chamber to the roasting chamber.

The same channel is used to evacuate the chaffs during the roasting operation and to evacuate the roasted beans at the end of the resting operation. This channel remains always opens and selective evacuation of the chaffs or of the roasted beans is operated by selective speed of the fan, the lowest speed enabling the evacuation of chaffs only whereas the highest speed enables the evacuation of the roasted beans. The chaffs and the beans are collected in a cyclone device enabling the separation of the heavy roasted coffee beans from the light chaffs in two different parts of the same collecting device. These parts must be manually separated to get access to the roasted beans.

This simple apparatus is convenient for roasting small quantities of beans, for example to rapidly sample green beans and evaluate their properties once roasted. But this apparatus is not adapted to the successive roasting operations of different beans in order to feed storing containers with roasted beans before further grinding and brewing operations. Being able to collect separately chaffs and roasted beans during successive roasting operations becomes an essential advantage to be able to prepare rapidly extracted coffee therefrom, even more for preparing extracted coffee for several customers simultaneously.

The above apparatus enables an operator to successively operate batches of beans and to store these batches of roasted beans, yet the successive dosing operations and disassembling and then re-assembling operations of the chaffs cyclone and the roasted beans collector are cumbersome.

An object of the present invention is to provide a roasting apparatus enabling a more automatic roasting operation, in particular when successive roasting operations are implemented.

Another object is to provide a roasting apparatus enabling a more practical collection of chaffs and roasted beans.

Another object is to provide a roasting apparatus enabling the roasting of different types of coffee beans and the storage of the corresponding roasted coffee beans automatically in different storage containers .

### Summary of the invention

In a first aspect of the invention, there is provided an apparatus for roasting coffee beans comprising :
- a roasting chamber,
- an air driver configured to drive air inside the roasting chamber through a bottom opening of said chamber,
- a heater configured to heat air driven inside the roasting chamber,
- a chaff collector connected to the roasting chamber through a first channel,
- at least one collector for fully roasted beans connected to the roasting chamber through at least one second channel,
wherein said apparatus comprises a distributing device configured to open either the first channel to the chaff collector only or the at least one second channel to the at least one beans collector only.

The roasting apparatus comprises a roasting chamber.

The chamber is preferably designed to enable the production of a fluidized bed of hot air. Usually hot air is introduced at the bottom of the chamber through a bottom opening. The bottom opening can comprise a grid to hold the beans inside the chamber while enabling the passage of hot air therethrough.

The chamber can be designed to provide the hot air with a particular movement inside the chamber. In one embodiment, the bottom of the chamber can comprise blades or can present a particular internal design to direct the heated airflow in useful flow streams or patterns with the effect of customising the fluidized bed and thereby the trajectories of the lofted beans during a roast.

The apparatus comprises an air driver configured to drive a flow of air inside the roasting chamber. Usually, this air driver is an air blower or a fan designed to suck air form outside the housing and to blow air to the bottom opening of the roasting chamber.

The apparatus comprises a heater, preferably electrical, configured to heat the flow of air before it is introduced inside the roasting chamber.

The apparatus comprises a chaff collector connectable to the roasting chamber through a first channel. Usually the chaff collector comprises a cyclone device enabling the separation of the particles of chaffs from hot air and gases.

In the present invention, the term "channel" designates either a fully closed path enclosing movable items (beans or chaffs) from one end of the channel to the other end of the channel or an opened path designed to guide items from one place to another without full enclosure along the path (like a chute).

The apparatus comprises a beans collector for fully roasted beans connectable to the roasting chamber through a second channel.

As the beans collector and the channel collector are connected to the roasting chamber by different channels, the operator is able to manipulate the roasted beans collector and the chaffs collector independently. In particular, the operator is able to use the roasted beans stored in the beans collector while a new roasting operation is initiated inside the roasting chamber. The operator is then able to use them when desired except during a step of filling of these collectors which is very short (several seconds) compared to the time of roasting (several minutes).

In one embodiment, the apparatus can comprise one fully roasted beans collector only, said collector being connected by one second channel to the roasting chamber.

In another embodiment, the apparatus can comprise several collectors of fully roasted beans, each of said collector being connected to the roasting chamber by one dedicated second channel.

In another embodiment, the apparatus can comprise :
- several collectors for fully roasted beans, and
- a sub-distributing device, said device being :
   . connected to the distributing device through the second channel, and
   . connected to each of the fully roasted beans collectors through dedicated sub-channels, and
   . configured to selectively open said dedicated sub-channels.

Accordingly, the sub-distributing device is connected upstream to the second channel of the distributing device and is connectable downstream to sub-channels, each of them being dedicated to one of the fully roasted beans collectors. The distributing sub-device avoids the design of direct connections of the distributing device of the chamber with all the beans collector. The connecting and distributing device of the chamber can remain simple.

Preferably, in this embodiment, the distributing device can comprise one second channel only. Yet, in order to increase the number of collectors for fully roasted beans, the distributing device can comprise more than one second channel, each of them being connected to different sub-distributing devices.

The sub-distributing device is connected to each of the fully roasted beans collectors through dedicated sub-channels and is configured to selectively open said dedicated sub-channels. preferably, the sub-distributing device is configured to open one dedicated sub-channel only while maintaining the other sub-channels closed. Accordingly, the full roasted beans obtained at the end of one particular roast can be directed to one particular fully roasted beans collector. If a different roast is operated, the resulting roasted beans can be directed and stored in another collector by opening its dedicated sub-channel while closing the others.

These embodiments with several collectors of roasted beans enable the roasting of different types of beans or the roasting of the same beans with different roasting profiles (such as different levels of roasting) and to store each resulting batch of roasted beans in different beans collectors.

The apparatus comprises a distributing device configured :
- to connect the roasting chamber either to the chaff collector only or to one beans collector only, and
- to share out either the chaffs to the chaff collector or the fully roasted beans to the beans collector.

Accordingly this device provides the function of connecting the chamber to the chaff collector and to the beans collector(s) and to distribute the chaffs and the roasted beans to the corresponding collector that is the chaffs to the chaff collector and the roasted bans to the roasted beans collector. This distributing function is obtained by having the distributing device configured to connect the roasting chamber:
- either to the chaff collector only. In that case, the connection(s) between the roasting chamber and the beans collector(s) is/are closed.
- or to one beans collector only. In that case, the connection to the chaffs collector and, if other fully roasted beans collectors exist, the connection to the other beans collector(s) is/are closed.

The distributing device provides connection of the chamber with one collector only according to the step of the process :
- step of roasting beans during which chaffs are collected,
- at the end of the roasting operation, step of emptying the chamber and collecting beans.

The collectors are connected to the chamber by different channels. As a result, the collectors of beans and fully roasted beans are well separated and there is no cumbersome and manual operation for the user when he/she wants to throw chaffs away and use roasted beans before initiating a new roasting operation.

The distributing device can be actuated automatically, by a motor, or manually (in that case a user interface can prompt the user to actuate the distributing device).

In a simplest embodiment, the non-roasted beans can be introduced manually inside the roasting chamber.

In another embodiment, the apparatus can comprise :
- at least one container for storing non-roasted beans and at least one device for dosing non-roasted beans from said at least one storing container, and
- at least one third channel to dispense said dosed beans in the roasting chamber, and
- the distributing device is configured to open or close said at least one third channel.

The apparatus can comprise one or more containers for storing beans to be roasted. When several containers are present, they can contain different types or blends of beans. The beans to be roasted can be green coffee beans or partially roasted coffee beans.

The apparatus can comprise one or more dosing devices to dose beans stored in the one or more storing containers. The dosing device can be any type comprising a metering cavity displaceable between a dosing position and a dispensing position. The dosing device can be a rotatable auger, a sliding drawer, a rotatable disc, an endless screw. The dosing device can be operated manually or automatically by a motor. In addition or alternatively the dosing device can comprise a weighting device like a scale to weight beans dispensed from the at least one storing container.

The dosing device can be part of the storing container. If several containers are present, then, preferably, each container comprises one dedicated dosing device. Yet, each container can also be linked to one common dosing device like the above mentioned weighting device. The dosing device comprises a beans dispensing outlet configured to dispense at least one dose of non-roasted coffee beans to the roasting chamber through the third channel. Preferably dispensing happens by gravity fall, for example by dispensing beans along a chute that forms the third channel. Accordingly, the dosing device is preferably positioned at a vertical level above the roasting chamber.

When several non-roasted beans containers and several dosing devices are present, then preferably each dosing device can be positioned to dispense and dose the beans in the same common chute. The apparatus can comprise a manifold configured to receive a dose of coffee beans from any of the storing and dosing containers and to supply this dose to the third channel.

In a less preferred embodiment, when several non-roasted beans containers and several dosing devices are present, the dosing device of each container can comprise a beans dispensing outlet configured to dispense at least one dose of non-roasted coffee beans to the roasting chamber through a dedicated third channel.

The distributing device is configured to open or close the at least one third channel depending if the apparatus is in the dosing operation or in the roasting operation respectively.

In one particular embodiment, the distributing device can comprise :
- one first fixed opening, said first opening connecting the roasting chamber to the first channel,
- at least one second fixed opening, said second opening connecting the roasting chamber to the at least one second channel,
- a movable selector means configured to either close or open the first opening or the at least one second opening and configured to be positioned :
   . in one first position wherein only the first fixed opening is opened,
   . in at least one second position wherein only the at least one second fixed opening is opened.

The movement of the selector means enables the selective opening of the first or the second fixed opening only.

In this particular embodiment, the apparatus can comprise at least one third channel to dispense non-roasted beans in the roasting chamber, and
the distributing device can comprise at least one third fixed opening, said third opening connecting the roasting chamber to said at least one third channel, and
- the movable selector means is configured to either close or open said at least one third opening and is configured to be positioned in at least one third position wherein :
   . in the first and second positions of the movable selector means, the at least one third fixed opening is closed, and
   . in the at least one third position, the third fixed opening is opened.

Accordingly, before the roasting operation, the movable selector means enables the filling of the chamber with non-roasted beans. When the apparatus comprises several storing containers for non-roasted beans, the at least one third opening enables the filling of the chamber with one particular type of beans (Arabica, Robusta or specific stored blend) or with a blend of different beans supplied from the different storing containers.

In this particular embodiment, the apparatus can comprise several collectors for fully roasted beans, and
- the connecting and distributing device can comprise several second fixed openings, each second opening connecting the roasting chamber to one dedicated roasted beans collector, and
- the movable selector means can be configured to be positioned in several second positions, wherein at each of said second position, only one of the second fixed openings is opened.

Accordingly, at the end of the roasting operation, the movable selector means enables the filling of one particular roasted beans collector with the freshly roasted beans according to one particular roasting profile (dark, medium or light) or with beans of a certain type (Arabica, Robusta or specific blend).

Alternatively, the connecting and distributing device can comprise several collectors for fully roasted beans, and the connecting and distributing device can comprise one second fixed opening, said second opening being connected to one second channel, and said second channel being connected to a sub-distributing device as mentioned above.

Preferably, the distributing device comprises :
- a fixed body, said body comprising :
   . the first fixed opening
   . the at least one second fixed opening,
   . optionally the at least one third fixed opening,
   and wherein the movable selector means comprises one aperture, said opening being configured to cooperate with the first, the at least one second or optionally the at least one third opening respectively when the selector means is moved in the first, second or third position respectively.

Preferably, the movable selector means comprises one aperture only.

In one embodiment, the fixed body can be the upper wall of the roasting chamber, such as the upper lateral wall or the top wall of the roasting chamber.

In an alternative embodiment, the fixed body is connectable to the top of the roasting chamber. Consequently, the fixed body is a device different from the roasting chamber but attached to the top of the chamber, for example to the upper edge of the lateral wall of the chamber.

Preferably, the fixed body is removably attached to the opened top of the roasting chamber. The distributing device can be designed to lie on the top of the chamber.

The movable selector can move in rotation or in translation. Preferably, the selector means is actuated by a motor.

Preferably, the fixed body is circular and the selector means of the distributing device is a ring, the cylindrical wall of said ring comprising one opening.

Accordingly, the ring is movable in rotation to enable the position of its opening in front of one of the fixed openings of the fixed body.

In one embodiment, the first channel, the at least one second channel and the at least one third channel are attached to the fixed body.

This embodiment presents the advantage of enabling separation of the roasting chamber from all the other devices that are the distributing device and connections to the collectors or containers in one single operation.

Preferably, the distributing device designs a double wall insulation around the first and the at least one second channel. Actually, flow of hot air in the channels increases the temperature of the walls of these channels which could burn the hands of the operator if he/she touches parts of the distributing device.

Preferably the apertures presents lateral vertical bias or rounded edges. Consequently, the risk that beans are blocked through the apertures during movement of the selector means is limited.

In one preferred embodiment, the chamber presents a cylindrical lateral wall and the internal part of the bottom of the roasting chamber is designed to create an upwardly swirl of hot air inside the chamber.

According to this embodiment, the first and the at least one second channels of the connecting and distributing device are preferably oriented tangentially to the cylindrical lateral wall of the chamber. Consequently, the movement of the chaffs or the beans from the chamber to the respective channels is facilitated when the selector means is in the first or the second position respectively.

The relative positions of the channels can be designed so that:
- the apparatus is compact in some preferred dimensions. For example, the channels can extend laterally to the chamber but not to the back of the chamber.
- and/or the movement of the selector means is reduced to reach extreme positions. Accordingly, time to reach different positions is reduced.
- and/or the containers and/or collectors are not too close to the roasting chamber. Accordingly, heat released by the chamber does not heat stored non-roasted beans and collected fully-roasted beans.
- and/or the roasting unit is coupled to a coffee extracting machine (to prepare coffee beverage form the fully roasted beans) and overall architecture has some technical constraints

Preferably, the apparatus comprises :
- an outlet duct configured to evacuate smoke from the chaff collector, and
- an outlet duct configured to evacuate hot air from the beans collector.

It is preferable that said outlet ducts are designed to drive air and smoke away from the front face of the roasting apparatus, that is where the operator is placed, and away from the dosing unit and the storing container of non-roasted beans to not affect dosing and properties of the beans.

In a second aspect, there is provided a method for roasting coffee beans with an apparatus such as described above, wherein said method comprises the steps of:
- introducing non-roasted coffee beans in the roasting chamber,
   then
- opening the first channel, in particular by moving the selector means in the first position wherein only the first fixed opening is opened, and
- actuating the air flow driver and the heater to roast the coffee beans,
   then
- opening the second channel, in particular by moving the selector means in the second position, wherein only the second fixed opening is opened, and
- actuating the air flow driver to evacuate the beans to the at least one beans collector.

When the apparatus comprises a third channel, and during the step of introducing non-roasted coffee beans in the roasting chamber, the third channel is opened, in particular by moving the selector means in the third position.

In one mode, the air flow driver is actuated so that the flow of air is lower during the roasting of the beans than during the evacuation of the beans.

Preferably, during the roasting of the beans, the flow of air is adjusted to prevent beans to flow through the first channel, and, during the evacuation of the beans, the flow of air is adjusted to enable beans to flow through the second channel.

In the present application :
- the terms "non-roasted beans" apply to green beans or partially roasted beans that is beans having been obtained by heating green coffee beans and stopping said heating process before the end of the first crack.
- the term "several" means two or more.

Further objects and advantageous features of the invention will be apparent from the claims, from the detailed description, and annexed drawings.

### Brief description of the drawings

Specific embodiments of the invention are now described further, by way of example, with reference to the following drawings in which :
- Figure 1 is a front view of a roasting apparatus according to the invention,
- Figure 2 is a perspective view of the roasting, the distributing and connecting device being removed,
- Figure 3 is a vertical cross section of the roasting apparatus along plane AA,
- Figure 4 is a vertical cross section of the chaff collector along plane BB,
- Figures 5A to 5F illustrate the different elements of the distributing device,
- Figure 6 illustrates the control system of the roasting apparatus.

### Detailed description of exemplary embodiments

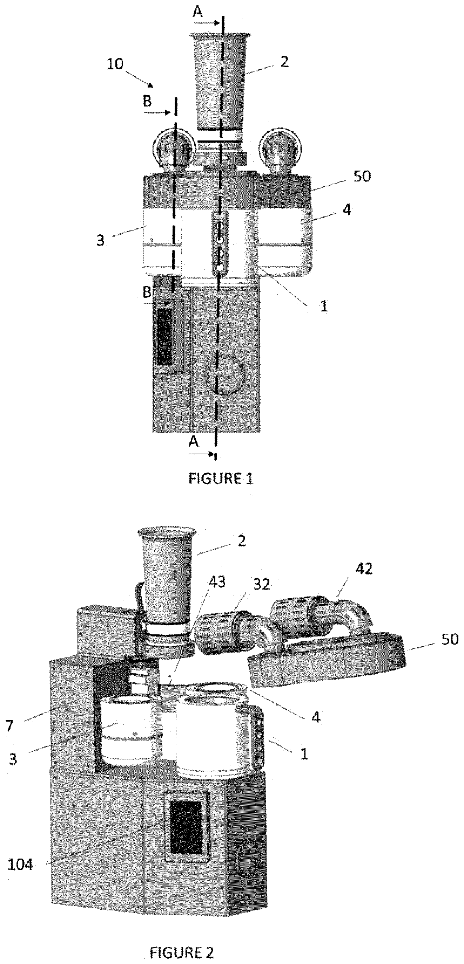

Figures 1 and 2 are views of a roasting apparatus 10 according the invention.

The chassis supports :
- a roasting chamber 1,
- a non-roasted coffee beans storing and dosing container 2
- a chaff collector 3,
- a roasted coffee beans collector 4, and
- an element 50 integrating the connecting functions with the chamber and the distributing device function.

Functionally, the roasting apparatus 10 is operable to store and dose non-roasted coffee beans in and from the container 2 and to roast dosed coffee beans in the roasting chamber 1. Chaffs generated during roasting operation are collected in the chaffs collector 3 and, at the end of the roasting operation, roasted beans are collected in the beans collector 4. The element 50 connects the roasting chamber 1 to the container 2 and the collectors 3, 4 and distributes beans and chaffs in and out of the roasting chamber 1 depending on the step of the roasting operation.

### Roasting chamber

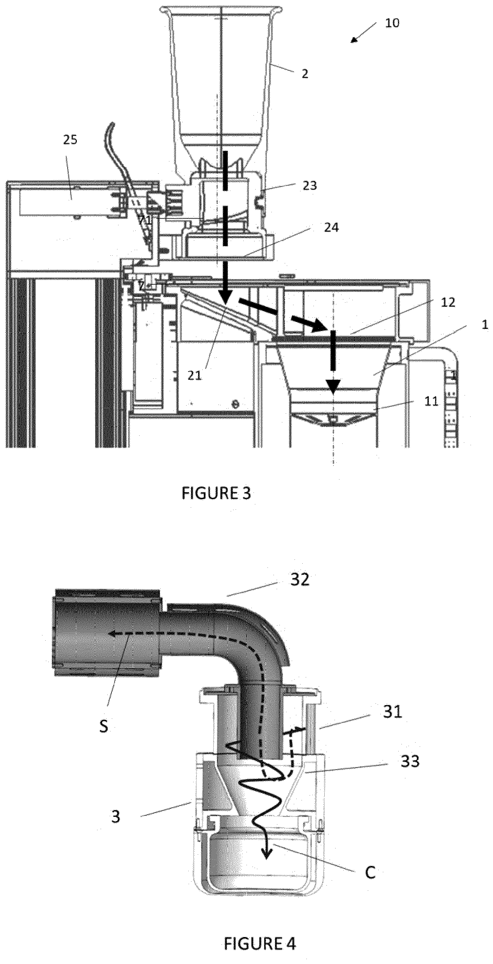

As illustrated in **Figure 3** that is a vertical cross section along plane AA in Figure 1, the roasting chamber 1 is configured to receive and hold beans and roast them by means of a flow of hot air introduced inside this chamber through its bottom opening 11.

The chamber 1 is configured to receive and hold the coffee beans introduced by the operator. In the preferred embodiment, the chamber 1 is removable from the frame 7, a handle being provided therefor. The chamber can be put aside the roasting apparatus :
- for the introduction or the removal of coffee beans (if the apparatus is deprived of beans container and doser, or in case of malfunction of the doser), or
- for cleaning and maintenance of the chamber once it is removed, or
- for cleaning of the housing part below and behind the chamber.

The bottom opening 11 of the chamber is configured to enable air to pass through, specifically it can comprise a perforated plate on which the beans can lie and through which air can flow upwardly. This perforated blade can comprise perforations designed to provide the air flow with a specific flow pattern inside the chamber. Preferably, the bottom of the roasting chamber is designed to create an upwardly swirl of hot air inside the chamber.

Below the chamber 1, the apparatus comprises an air flow driver and a heater, which are not illustrated.

The air flow driver is operable to generate a flow of air in direction of the bottom of the chamber. The generated flow is configured to heat the beans and to agitate and lift the beans. As a result the beans are homogenously heated. Specifically, the air flow driver can be a fan powered by a motor.

The heater is operable to heat the flow of air generated by the air flow driver. The heater is usually an electrical resistance positioned between the air flow driver and the bottom opening 11 of the chamber with the result that the flow of air is heated before it enters the chamber 1 to heat and to lift the beans.

The heater 3 is operable to apply a roasting profile to the beans, this roasting profile being defined as a curve of temperature against time. A temperature probe is usually positioned upstream the heater to measure the temperature of the hot air flow entering the chamber.

### Non-roasted coffee beans storing and dosing container

Figure 3 illustrates the storing container 2 that holds non-roasted coffee beans. A dosing device 23 cooperates with the bottom of the container to dose and dispense the dose of non-roasted beans to the top opening 12 of the chamber as illustrated by the dotted arrows.

In this particular embodiment, the dosing device 23 is a barrel comprising at least one metering cavity and rotated by a motor 25 by teeth engagement between barrel and motor shaft. Other types of dosing devices can be used. From the dispensing outlet 24 of the dosing device beans fall by gravity in a chute 21 oriented in direction of the top opening 12 of the chamber.

### Chaff collector

The chaff collector is in flow communication with the chamber to receive chaffs that have been progressively separated from the beans during roasting and due to their light density are blown off with hot air and smoke generated during roasting to the chaff collector.

**Figure 4** is a vertical cross section of the roasting apparatus of Figure 1 according to plane BB and illustrating the chaff collector 3. This collector comprises a container to receive the chaffs evacuated from the chamber through the channel 31 connected to the top of the container. Preferably the chaffs collector comprises a cyclone device to separate the light chaffs C from the hot smoke S transporting said chaffs from the roasting chamber. Arrow C illustrates the path of the chaffs in the cyclone, whereas arrow S illustrates the hot smoke S evacuated from the apparatus through a conduit 32. preferably, this conduit 32 is oriented to dispense the hot smoke S away from the front face of the roasting apparatus which is the place where the operator interacts with the apparatus.

The chaff collector 3 is removably attached to the chassis 7, for example through a holding arm 43 (Figure 2) extending from the chassis and comprising means for removably attaching the collector to the arm (like a pin).

### Roasted beans collector

The roasted beans collector 4 illustrated in Figure 1 is in flow communication with the chamber to receive beans at the end of the roasting operation.

The roasted beans collector 4 is designed in a similar way as the chaffs collector. Beans are collected at the bottom of the collector whereas hot air is evacuated through the conduit 42. The beans collector 4 is removably attached to the chassis 7 in a similar way as the chaffs collector.

Consequently, each collector 3, 4 is dedicated either to roasted beans or to chaffs.

These collectors are positioned at different places, spaced apart one from the other.

The collector 4 of roasted beans can be designed to hold a quantity of beans corresponding to several operations of roasting ; it is not necessary to empty this container at each roasting operation, particularly if the same non-roasted beans are roasted successively with the same roasting recipe. This collector 4 can be manipulated, for example a part of the roasted beans can be withdrawn, while a roasting operation is happening in the roasting chamber.

### Connecting and distributing device

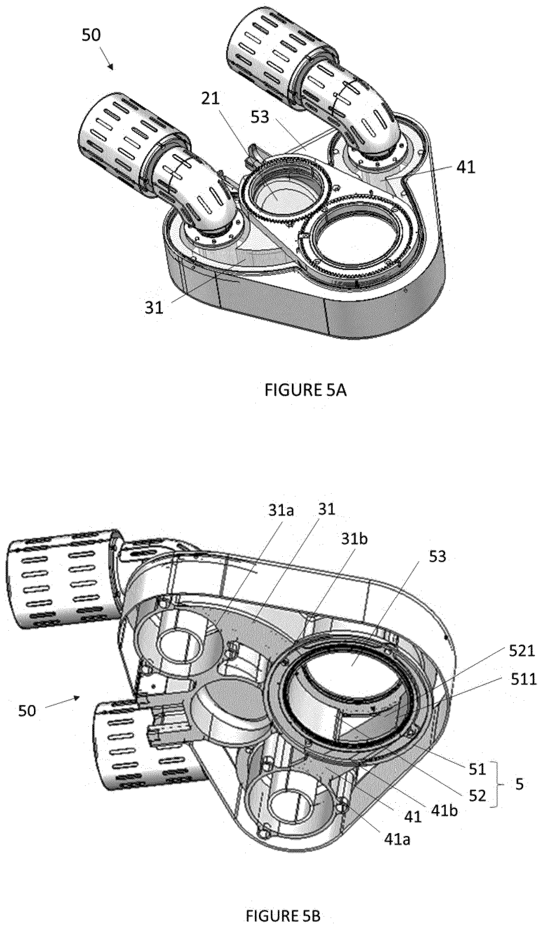

Figures 5A to 5F illustrate the element 50 that holds the connecting and distributing functions.

**Figure 5A** is an isolated upper view of the element 50 removed from the roasting apparatus 10. The top of this element is covered by a cover 53 except at the chute 21 forming a channel in direction of the roasting chamber. In Figure 5A, the cover 53 is made transparent to show two other channels 31, 41 just below the cover : the first channel 31 enables the connection of the roasting chamber with the chaffs collector and the second channel 41 enables the connection of the roasting chamber with the beans collector.

**Figure 5B** is a bottom view of the element 50 where these two channels 31 and 41 are apparent. When the element 50 is positioned inside the roasting apparatus, each of these channels 31, 41 emerges at one end 31a, 41a in one collector, 3 and 2 respectively, and at the other end 31b, 41b in the roasting chamber 1. The top of the roasting chamber is closed by the cover 53. In addition, the element 50 integrates the distributing device 5 configured to open either the first channel 31 to the chaff collector 3 only or the second channel 41 to the beans collector 4 only.

The element 50 is fully removable from the apparatus 10 as illustrated in Figure 2. When it is positioned inside the apparatus as illustrated in Figure 1, the element 50 is hold by the roasting chamber 1, the distributing device 5 cooperating with the top opening 12 of the chamber and forming the upper part of the roasting space as apparent from Figure 3. Preferably the cooperation is designed to avoid air leaking during the roasting operation in the space formed by the roasting chamber 1 and the distributing device 5.

When the element 50 is positioned inside the apparatus as illustrated in Figure 1, the ends 31a, 41a of the channels are positioned above each respective collector 3, 4 without being hold or retained by the collectors. Accordingly the collectors 3, 4 can be removed from the apparatus without having to remove the device 50 from the apparatus, for example the collector 4 can be removed during the roasting operation.

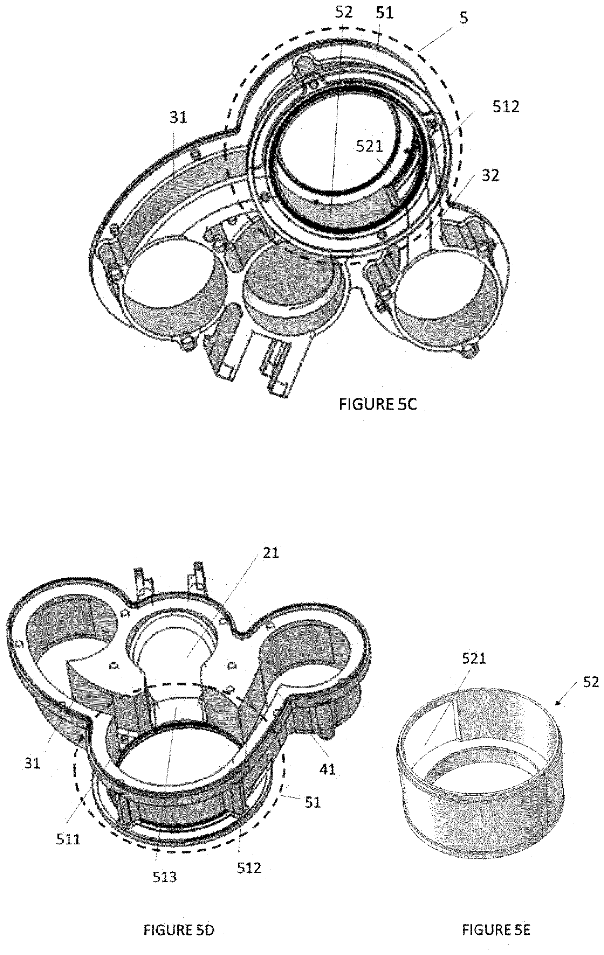

Figures 5C to 5E isolate and illustrate the distributing device 5 in a more detailed manner. The distributing device 5 comprises a fixed body 51 and a movable selector means 52 as illustrated in **Figure 5C****.**

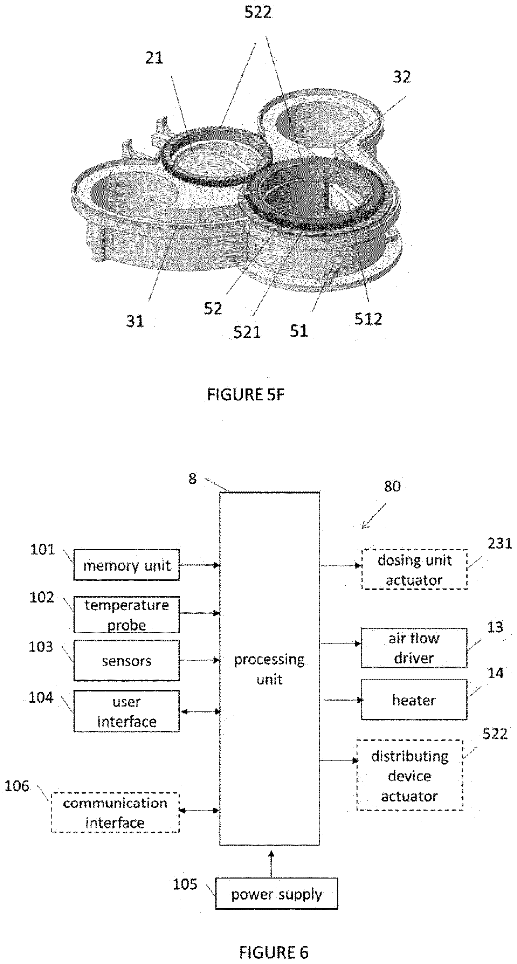

The fixed body 51 is illustrated alone in **Figure 5D**. This body 51 comprises three fixed openings 511, 512 and 513, each of them connecting the roasting chamber 1 with either the chaffs collector 3, through the channel 31, or the beans collector 34, through the channel 41, or the beans container 2, through the chute 21. Connections are established by three fixed openings 511, 512 and 513 here in the lateral wall of the fixed body. The selector means 52 is illustrated alone in **Figure 5E****.** It is a ring designed to be positioned inside the fixed body 51 and comprising one aperture 521 only that can be positioned in front of one of the openings 511, 512 or 513 only. As shown in **Figure 5F****,** the selector means is made movable by attachment to a gear mechanism 522 actuated by a motor (not illustrated) and enabling the movement of the aperture 521 relatively to the fixed body 51. As a result, the aperture 521 can be positioned selectively :
- in front of the aperture 513 to open the connection with the beans container 2 and the dosing unit 23 through the chute 21 during before the roasting operation as illustrated in Figure 3.
- in front of the aperture 511 to open the connection with the chaffs collector 3 through the channel 31 during the roasting operation. In one embodiment, the size and the shape of the aperture 511 can be designed to enable chaffs only to pass through this aperture and to the collector 3 and prevent beans from passing. A sieve or mesh can also cover the opening to sieve chaffs from the beans.
- in front of the aperture 512 to open the connection with the beans collector 4 through the channel 41 at the end of the roasting operation. The beans are sent to this collector 4 by flowing non heated air from the bottom of the chamber. The other openings 512, 513 remain closed.

In the present embodiment, the fixed body and the selector means present the shapes of complementary rings. In alternative embodiments, other shapes can be envisaged like flat walls with fixed openings selectively openable by at least one translating door.

In an alternative embodiment, at least one of the three fixed openings in the fixed body can be at the top wall or cover and the selector means can be a disc with one aperture able to slide along the top wall to open and close the openings.

In the present embodiment, the fixed body 51 and the channels 31, 41, and 21 are made of one single piece of material.

In other embodiments, these elements can be separated and assembled one to the other or positioned closed one to the other to achieve the same functions and operations.

In the illustrate embodiment smoke evacuation 32, 42 are attached to the connecting and distributing device 50. In alternative embodiments these evacuations can be designed to be separate from this device 50.

### Control System of the roasting apparatus

With reference to **Figures 1**, **5B** **and** **6****,** the control system 80 will now be considered : the control system 80 is operable to control the components of the apparatus to roast coffee beans. The control system 80 typically comprises at a second level of roasting apparatus : a user interface 104, a processing unit 8, temperature probe 102, a power supply 105, a memory unit 101, sensors 103, optionally an actuator 522 for the distributing device, optionally a communication interface.

The user interface 104 comprises hardware to enable a user to interface with the processing unit 8, by means of user interface signal. More particularly, the user interface receives commands from a user, the user interface signal transfers the said commands to the processing unit 8 as an input. The commands may, for example, be an instruction to execute a roasting process and/or to adjust an operational parameter of the roasting apparatus 10 and/or to power on or off the roasting apparatus 10. The processing unit 8 may also output feedback to the user interface 104 as part of the roasting process, e.g. to indicate the roasting process has been initiated or that a parameter associated with the process has been selected or to indicate the evolution of a parameter during the process or to create an alarm or to urge the operator to actuate one of the device.

In a particular embodiment where the roasting apparatus does not comprise an actuator for the distributing device, the user interface can be used to urge the operator to position manually the selector means 522 of the distributing device in one specific position.

The hardware of the user interface may comprise any suitable device(s), for example, the hardware comprises one or more of the following : buttons, such as a joystick button, knob or press button, joystick, LEDs, graphic or character LDCs, graphical screen with touch sensing and/or screen edge buttons. The user interface 20 can be formed as one unit or a plurality of discrete units.

A part of the user interface can also be on a mobile app when the apparatus is provided with a communication interface 106 as described below. In that case the input and output can be transmitted to the mobile device through the communication interface 106.

The sensors are operable to provide an input signal to the processing unit 8 for monitoring of the roasting process and/or a status of the roasting apparatus. The input signal can be an analogue or digital signal. The sensors typically comprise at least one temperature probe 102 providing an input signal to the processing unit 8 for monitoring of the roasting process and one or more of the following sensors 103 : beans level sensor associated with the chamber 1, air flow rate sensor, position sensor associated with the chamber, the beans collector, the beans container and/or the chaff collector, position sensor associated with the selector means of the distributing device.

The processing unit 8 generally comprise memory, input and output system components arranged as an integrated circuit, typically as a microprocessor or a microcontroller. The processing unit 8 may comprises other suitable integrated circuits, such as : an ASIC, a programmable logic device such as a PAL, CPLD, FPGA, PSoC, a system on a chip (SoC), an analogue integrated circuit, such as a controller. For such devices, where appropriate, the aforementioned program code can be considered programmed logic or to additionally comprise programmed logic. The processing unit 8 may also comprise one or more of the aforementioned integrated circuits. An example of the later is several integrated circuits is arranged in communication with each other in a modular fashion e.g. : a slave integrated circuit to control the user interface 104 in communication with a master integrated circuit to control the air flow driver 13, the heater 14 and/or the actuator 522.

The power supply 105 is operable to supply electrical energy to the said controlled components and the processing unit 8. The power supply 105 may comprise various means, such as a battery or a unit to receive and condition a main electrical supply. The power supply 105 may be operatively linked to part of the user interface 104 for powering on or off the roasting apparatus 10.

The processing unit 8 generally comprises a memory unit 101 for storage of instructions as program code and optionally data. To this end the memory unit typically comprises : a nonvolatile memory e.g. EPROM, EEPROM or Flash for the storage of program code and operating parameters as instructions, volatile memory (RAM) for temporary data storage. The memory unit may comprise separate and/or integrated (e.g. on a die of the semiconductor) memory. For programmable logic devices the instructions can be stored as programmed logic.

The instructions stored on the memory unit 101 can be idealised as comprising a coffee beans roasting program.

At the beginning of a roasting process, the roasting program can effect control of the motorised actuators 231 and 522 of the dosing unit and the distributing device respectively if the apparatus comprises these actuators.

If the apparatus comprises a motorised actuator 522 for the distributing device, the processing unit 8 is operable to provide an output which is the actuation of this actuator until the aperture 521 is positioned in front of the third channel 21.

If the apparatus comprises a motorised actuator 231 for the dosing unit, the processing unit 8 is operable to provide an output which is the introduction of a quantity of non-roasted beans inside the chamber 1 through the third channel 21. This quantity of beans can be determined by input at the user interface 104.

If the apparatus does not comprise a dosing unit actuator, then the user interface 104 can provide an output to urge the operator to introduce the beans inside a container connected to the chamber through a through a channel 21 or through a chute 21.

If the apparatus does not comprise a dosing unit actuator, then the user interface 104 can provide an output to urge the operator to move manually the selector until the aperture 521 is positioned in front of the third channel or the chute 21.

Once the beans are introduced inside the chamber, the roasting program can effect control of the motorised actuator 522 of the distributing device to provide an output which is the actuation of this actuator until the aperture 521 is positioned in front of the first channel 31 to the chaffs collector. Alternatively, the roasting program can effect control of the user interface to urge the operator to move manually the selector until the aperture 521 is positioned in front of the first channel.

Then the coffee beans roasting program can implement the roasting operation by controlling of the air flow driver 2 and/or the heater 3 using signal of the temperature sensor 102.

The processing unit 8 is operable to :
- receive an input of the temperature probe 102,
- process the input according to roasting program code (or programmed logic) stored on the memory unit 101 (or eventually inputed from an external source such as the communication interface 106),
- provide an output, which is the roasting process according to the roasting recipe. More specifically the output comprises the operation of at least the heater 14 and the air flow driver 132.

The temperature measured by the temperature probe 102 is used to adapt the power of the heater 14 and/or the power of the air driver 13 in a feedback loop in order to apply a pre-determined roasting profile to the beans.

Depending on the type of control applied in the roaster, the heater 14 can be powered at one pre-determined power, meaning its temperature is constant, and in that case the power of the air driver 13 can be controlled based on the temperature monitored at the probe 102 in order to vary the time of contact of the flow air through the heater during its movement.

Alternatively, the air driver 13 can be powered at one pre-determined power, meaning the flow rate of air is constant, and in that case the power of the heater 14 can be controlled based on the temperature monitored at the probe 102 in order to heat more or less air during its passage through the heater.

In a last alternative, both heater 14 and air driver 13 can be controlled based on the monitoring of the temperature by probe 102.

At the end of the roasting operation, the processing unit is operable to provide an output, which is stopping the heater 14.

Simultaneously or subsequently, the program can effect control of the motorised actuator 522 of the distributing device to provide an output which is the actuation of this actuator until the aperture 521 is positioned in front of the second channel 41 to the roasted beans collector. Alternatively, the roasting program can effect control of the user interface to urge the operator to move manually the selector until the aperture 521 is positioned in front of the second channel.

During this operation, the processing unit is operable to provide an output, which is the operation of the air flow driver 13 in order to drive roasted beans out of the chamber.

In one embodiment, the air flow driver can be operated differently during the roasting operation and during the operation of evacuating the roasted beans from the roasting chamber. In particular, during roasting, the air flow driver can be operated to produce an air flow that does not enable the lifting of beans up to the opened first fixed opening and the first channel to the chaff collector, and at the end of the roasting, the air flow driver can be operated to produce a more powerful air flow that enables the lifting of the beans up to the opened second fixed opening and the second channel to the beans collector.

Although the invention has been described with reference to the above illustrated embodiments, it will be appreciated that the invention as claimed is not limited in any way by these illustrated embodiments.

As used in this specification, the words "comprises", "comprising", and similar words, are not to be interpreted in an exclusive or exhaustive sense. In other words, they are intended to mean "including, but not limited to".

**List of references in the drawings :**

| | | | |
|---|---|---|---|
| roasting chamber | | | 1 |
| | bottom openings | | 11 |
| | top opening | | 12 |
| | air flow driver | | 13 |
| | heater | | 14 |
| storing container | | | 2 |
| | third channel | | 21 |
| | container | | 22 |
| | dosing unit | | 23 |
| | actuator | | 231 |
| | outlet | | 24 |
| chaff collector | | | 3 |
| | first channel | | 31 |
| | channel ends | | 31a, 31b |
| | outlet duct | | 32 |
| | cyclone | | 33 |
| beans collector | | | 4 |
| | second channel | | 41 |
| | channel ends | | 41a, 41b |
| | outlet duct | | 42 |
| | arm | | 43 |
| distributing device | | | 5 |
| | body | | 51 |
| | | first opening | 511 |
| | second opening | | 512 |
| | third opening | | 513 |
| selector means | | | 52 |
| | aperture | | 521 |
| | actuator | | 522 |
| upper cover | | | 53 |
| chassis | | | 7 |
| processing unit | | | 8 |
| control system | | | 80 |
| roasting apparatus | | | 10 |
| memory unit | | | 101 |
| temperature probe | | | 102 |
| sensors | | | 103 |
| user interface | | | 104 |
| power supply | | | 105 |
| communication interface | | | 106 |
| smoke | | | S |
| chaffs | | | C |

## Claims

1. Apparatus (10) for roasting coffee beans comprising :
- a roasting chamber (1),
- an air driver (8) configured to drive air inside the roasting chamber through a bottom opening of said chamber,
- a heater (9) configured to heat air driven inside the roasting chamber,
- a chaff collector (3) connected to the roasting chamber through a first channel (31),
- at least one collector (4) for fully roasted beans connected to the roasting chamber through at least one second channel (41),
**characterised in that** said apparatus comprises a distributing device (5) configured to open either the first channel to the chaff collector (3) only or the at least one second channel to the at least one beans collector (4) only.

2. Apparatus according to Claim 1, wherein said apparatus comprises :
- several collectors (4a, 4b) for fully roasted beans, and
- a sub-distributing device, said device being :
. connected to the distributing device (5) through the second channel, and
. connected to each of the fully roasted beans collectors (4) through dedicated sub-channels, and
. configured to selectively open said dedicated sub-channels.

3. Apparatus according to Claim 1 or 2, wherein said apparatus comprises at least one container (2) for storing non-roasted beans and at least one device (22) for dosing non-roasted beans from said at least one storing container (21) and at least one third channel (21) to dispense said dosed beans in the roasting chamber (1), and
the distributing device (5) is configured to open or close said at least one third channel.

4. Apparatus according to any one of the precedent claims, wherein the distributing device (5) comprises :
- one first fixed opening (511), said first opening connecting the roasting chamber to the first channel (31),
- at least one second fixed opening (512), said second opening connecting the roasting chamber to the at least one second channel (41),
- a movable selector means (52) configured to either close or open the first opening or the at least one second opening and configured to be positioned in at least two positions wherein :
. in one first position only the first fixed opening (511) is opened
. in at least one second position only the at least one second fixed opening (512) is opened.

5. Apparatus according to the precedent claim wherein :
- said apparatus comprises at least one third channel (21) to dispense non-roasted beans in the roasting chamber, and
- the distributing device (5) comprises at least one third fixed opening (513), said third opening connecting the roasting chamber to said at least one third channel, and
- the movable selector means (52) is configured to either close or open said at least one third opening, and
- the movable selector means (52) is configured to close said at least one third fixed opening when the selector is positioned in the first position and when the selector is positioned in the second position, and
- the movable selector means (52) is configured to be positioned in at least one third position wherein the at least one third fixed opening is opened.

6. Apparatus according to Claim 4 or 5, wherein :
- said apparatus comprises several beans collectors (4a, 4b) for fully roasted beans, and
- the distributing device (5) comprises several second fixed openings (512), each second opening connecting the roasting chamber to one dedicated second channel (41) of one dedicated roasted beans collector, and
- the movable selector means (52) is configured to be positioned in several second positions, wherein at each of said second position, only one of the second fixed openings is opened (that is the first fixed opening and the other second openings are closed).

7. Apparatus according to any one of claims 4-6, wherein the distributing device (5) comprises :
- a fixed body (51), said body comprising :
. the first fixed opening (511),
. the at least one second fixed opening (512),
. optionally the at least one third fixed opening (513),
and wherein the movable selector means (52) comprises one aperture (521), said aperture being configured to cooperate with the first, the at least one second or optionally the at least one third opening respectively when the selector means is moved in the first, second or third position respectively.

8. Apparatus according to the precedent claim, wherein the fixed body (51) is the upper wall of the roasting chamber.

9. Apparatus according to Claim 7, wherein the fixed body (51) is connected to the top (12) of the roasting chamber.

10. Apparatus according to any one of Claims 7 to 9, wherein the first channel (31), the at least one second channel (41) and optionally the at least one third channel (21) are attached to the fixed body (51).

11. Method for roasting coffee beans with an apparatus (10) according to any one of Claims 1 to 10, wherein said method comprises the steps of :
- introducing non-roasted coffee beans in the roasting chamber (1),
then
- opening the first channel (31), in particular by positioning a selector means (52) in a first position, wherein only the first fixed opening (511) is opened, and actuating the air flow driver (13) and the heater (14) to roast the coffee beans,
then
- at the end of the roasting, opening the second channel (41), in particular by moving the selector means (52) in a the- second position, wherein only the second fixed opening (512) is opened, and actuating the air flow driver (13) to evacuate the beans to the at least one beans collector (4).

12. Method according to the precedent claim, wherein the apparatus (10) comprises a third channel (21), and during the step of introducing non-roasted coffee beans in the roasting chamber, said third channel (21) is opened, in particular by moving the selector means (52) in a third position.

13. Method according Claim 11 or 12, wherein the air flow driver is actuated so that the flow of air is lower during the roasting of the beans than during the evacuation of the roaster beans.

14. Method according to the precedent claim, wherein, during the roasting of the beans, the flow of air is adjusted to prevent beans to flow through the first channel (31), and, during the evacuation of the beans, the flow of air is adjusted to enable beans to flow through the second channel (41).

## Patentansprüche

1. Einrichtung (10) zum Rösten von Kaffeebohnen, umfassend:
- eine Röstkammer (1),
- einen Lufttreiber (8), der konfiguriert ist, um Luft ins Innere der Röstkammer durch die untere Öffnung der Kammer hindurch zu treiben,
- ein Heizelement (9), das konfiguriert ist, um Luft zu erhitzen, die ins Innere der Röstkammer getrieben wird,
- einen Spreusammler (3), der durch einen ersten Kanal (31) hindurch mit der Röstkammer verbunden ist,
- mindestens einen Sammler (4) für vollständig geröstete Bohnen, der mit der Röstkammer durch mindestens einen zweiten Kanal (41) hindurch verbunden sind,
**dadurch gekennzeichnet, dass**
die Einrichtung eine Verteilungsvorrichtung (5) umfasst, die konfiguriert ist, um entweder den ersten Kanal nur für den Spreusammler (3) oder den mindestens einen zweiten Kanal nur für den mindestens einen Bohnensammler (4) zu öffnen.

2. Einrichtung nach Anspruch 1, wobei die Einrichtung umfasst:
- mehrere Sammler (4a, 4b) für vollständig geröstete Bohnen und
- eine Unterverteilungsvorrichtung, wobei die Vorrichtung ist:
. mit der Verteilungsvorrichtung (5) durch den zweiten Kanal hindurch verbunden, und
. mit jedem der Sammler (4) der vollständig gerösteten Bohnen durch dedizierte Unterkanäle hindurch verbunden, und
. konfiguriert, um die dedizierten Unterkanäle selektiv zu öffnen.

3. Einrichtung nach Anspruch 1 oder 2, wobei die Einrichtung mindestens einen Behälter (2) zum Aufbewahren von nicht-gerösteten Bohnen und mindestens eine Vorrichtung (22) zum Dosieren von nicht-gerösteten Bohnen aus dem mindestens einen Aufbewahrungsbehälter (21) und mindestens einen dritten Kanal (21) umfasst, um die dosierten Bohnen in der Röstkammer (1) abzugeben, und
die Verteilungsvorrichtung (5) konfiguriert ist, um den mindestens einen dritten Kanal zu öffnen oder zu schließen.

4. Einrichtung nach einem der vorstehenden Ansprüche, wobei die Verteilungsvorrichtung (5) umfasst:
- eine erste feste Öffnung (511), wobei die erste Öffnung die Röstkammer mit dem ersten Kanal (31) verbindet,
- mindestens eine zweite feste Öffnung (512), wobei die zweite Öffnung die Röstkammer mit dem mindestens einen zweiten Kanal (41) verbindet,
- ein bewegbares Auswahlmittel (52), das konfiguriert ist, um die erste Öffnung oder die mindestens eine zweite Öffnung entweder zu schließen oder zu öffnen, und konfiguriert ist, um in mindestens zwei Positionen positioniert zu werden, wobei:
. in einer ersten Position nur die erste feste Öffnung (511) geöffnet wird
. in mindestens einer zweiten Position nur die mindestens eine zweite feste Öffnung (512) geöffnet wird.

5. Einrichtung nach dem vorstehenden Anspruch, wobei:
- die Einrichtung mindestens einen dritten Kanal (21) umfasst, um nichtgeröstete Bohnen in der Röstkammer abzugeben, und
- die Verteilungsvorrichtung (5) mindestens eine dritte feste Öffnung (513) umfasst, wobei die dritte Öffnung die Röstkammer mit dem mindestens einen dritten Kanal verbindet, und
- das bewegbare Auswahlmittel (52) konfiguriert ist, um die mindestens eine dritte Öffnung entweder zu schließen oder zu öffnen, und
- das bewegbare Auswahlmittel (52) konfiguriert ist, um die mindestens eine dritte feste Öffnung zu schließen, wenn das Auswahlelement in der ersten Position positioniert ist und wenn das Auswahlelement in der zweiten Position positioniert ist, und
- das bewegbare Auswahlmittel (52) konfiguriert ist, um in mindestens einer dritten Position positioniert zu werden, wobei die mindestens eine dritte feste Öffnung geöffnet ist.

6. Einrichtung nach Anspruch 4 oder 5, wobei:
- die Einrichtung mehrere Bohnensammler (4a, 4b) für vollständig geröstete Bohnen umfasst, und
- die Verteilungsvorrichtung (5) mehrere zweite feste Öffnungen (512) umfasst, wobei jede zweite Öffnung die Röstkammer mit einem dedizierten zweiten Kanal (41) eines dedizierten gerösteten Bohnensammlers verbindet, und
- das bewegbare Auswahlmittel (52) konfiguriert ist, um in mehreren zweiten Positionen positioniert zu werden, wobei an jeder der zweiten Position nur eine der zweiten festen Öffnungen geöffnet ist (das die erste feste Öffnung ist und die anderen zweiten Öffnungen geschlossen sind).

7. Einrichtung nach einem der Ansprüche 4 bis 6, wobei die Verteilungsvorrichtung (5) umfasst:
- einen festen Körper (51), der Körper umfassend:
. die erste feste Öffnung (511),
. die mindestens eine zweite feste Öffnung (512),
. optional mindestens eine dritte feste Öffnung (513),
und wobei das bewegbare Auswahlmittel (52) eine Apertur (521) umfasst, wobei die Apertur konfiguriert ist, um mit der ersten, der mindestens einen zweiten beziehungsweise optional der mindestens einen dritten Öffnung zusammenzuwirken, wenn das Auswahlmittel in die erste, die zweite oder die dritte Position bewegt wird.

8. Einrichtung nach dem vorstehenden Anspruch, wobei der feste Körper (51) die obere Wand der Röstkammer ist.

9. Einrichtung nach Anspruch 7, wobei der feste Körper (51) mit der Oberseite (12) der Röstkammer verbunden ist.

10. Einrichtung nach einem der Ansprüche 7 bis 9, wobei der erste Kanal (31), der mindestens eine zweite Kanal (41) und optional der mindestens eine dritte Kanal (21) an dem festen Körper (51) angebracht sind.

11. Verfahren zum Rösten von Kaffeebohnen mit einer Einrichtung (10) nach einem der Ansprüche 1 bis 10, wobei das Verfahren die folgenden Schritte umfasst:
- Einführen von nicht-gerösteten Kaffeebohnen in die Röstkammer (1), dann
- Öffnen des ersten Kanals (31), insbesondere durch Positionieren eines Auswahlmittels (52) in einer ersten Position, wobei nur die erste feste Öffnung (511) geöffnet wird, und Betätigen des Luftströmungstreibers (13) und des Heizelements (14), um die Kaffeebohnen zu rösten, dann
- am Ende des Röstens, Öffnen des zweiten Kanals (41), insbesondere durch Bewegen des Auswahlmittels (52) in eine zweite Position, wobei nur die zweite feste Öffnung (512) geöffnet wird, und Betätigen des Luftströmungstreibers (13), um die Bohnen an den mindestens einen Bohnensammler (4) zu entleeren.

12. Verfahren nach dem vorstehenden Anspruch, wobei die Einrichtung (10) einen dritten Kanal (21) umfasst und während des Schritts des Einführens von nicht-gerösteten Kaffeebohnen in der Röstkammer der dritte Kanal (21) geöffnet wird, insbesondere durch Bewegen des Auswahlmittels (52) in eine dritte Position.

13. Verfahren nach Anspruch 11 oder 12, wobei der Luftströmungsantreiber betätigt wird, sodass der Luftstrom während des Röstens der Bohnen niedriger als während der Entleerung der Röstbohnen ist.

14. Verfahren nach dem vorstehenden Anspruch, wobei, während des Röstens der Bohnen, der Luftstrom angepasst wird, um zu verhindern, dass Bohnen durch den ersten Kanal (31) hindurch fließen, und, während der Entleerung der Bohnen, der Luftstrom abgepasst wird, um zu ermöglichen, dass Bohnen durch den zweiten Kanal (41) hindurch fließen.

## Revendications

1. Appareil (10) permettant de torréfier des grains de café comprenant :
- une chambre de torréfaction (1),
- un dispositif d'entraînement d'air (8) conçu pour entraîner de l'air à l'intérieur de la chambre de torréfaction par l'intermédiaire d'une ouverture inférieure de ladite chambre,
- un dispositif de chauffage (9) conçu pour chauffer de l'air entraîné à l'intérieur de la chambre de torréfaction,
- un collecteur de déchets (3) raccordé à la chambre de torréfaction par l'intermédiaire d'un premier canal (31),
- au moins un collecteur (4) pour des grains complètement torréfiés, raccordé à la chambre de torréfaction par l'intermédiaire d'au moins un deuxième canal (41),
**caractérisé en ce que**
ledit appareil comprend un dispositif de distribution (5) conçu pour ouvrir soit le premier canal vers le collecteur de déchets (3) uniquement soit l'au moins un deuxième canal vers l'au moins un collecteur (4) de grains uniquement.

2. Appareil selon la revendication 1, dans lequel ledit appareil comprend :
- plusieurs collecteurs (4a, 4b) pour des grains complètement torréfiés, et
- un sous-dispositif de distribution, ledit dispositif étant :
. raccordé au dispositif de distribution (5) par l'intermédiaire du deuxième canal, et
. raccordé à chacun des collecteurs (4) de grains complètement torréfiés par l'intermédiaire de sous-canaux dédiés, et
. configuré pour ouvrir sélectivement lesdits sous-canaux dédiés.

3. Appareil selon la revendication 1 ou 2, dans lequel ledit appareil comprend au moins un récipient (2) permettant de stocker des grains non torréfiés et au moins un dispositif (22) permettant de doser des grains non torréfiés provenant dudit au moins un récipient de stockage (21) et au moins un troisième canal (21) pour dispenser lesdits grains dosés dans la chambre de torréfaction (1), et
le dispositif de distribution (5) est configuré pour ouvrir ou fermer ledit au moins un troisième canal.

4. Appareil selon l'une quelconque des revendications précédentes, dans lequel le dispositif de distribution (5) comprend :
- une première ouverture fixe (511), ladite première ouverture raccordant la chambre de torréfaction au premier canal (31),
- au moins une deuxième ouverture fixe (512), ladite deuxième ouverture raccordant la chambre de torréfaction à l'au moins un deuxième canal (41),
- un moyen sélecteur (52) mobile configuré soit pour fermer soit pour ouvrir la première ouverture ou l'au moins une seconde ouverture et configuré pour être positionné dans au moins deux positions dans lequel :
. dans une première position, seule la première ouverture fixe (511) est ouverte
. dans au moins une deuxième position, seule l'au moins une deuxième ouverture fixe (512) est ouverte.

5. Appareil selon la revendication précédente dans lequel :
- ledit appareil comprend au moins un troisième canal (21) pour dispenser des grains non torréfiés dans la chambre de torréfaction, et
- le dispositif de distribution (5) comprend au moins une troisième ouverture fixe (513), ladite troisième ouverture raccordant la chambre de torréfaction audit au moins un troisième canal, et
- le moyen sélecteur (52) mobile est configuré soit pour fermer soit pour ouvrir ladite au moins une troisième ouverture, et
- le moyen sélecteur (52) mobile est configuré pour fermer ladite au moins une troisième ouverture fixe lorsque le sélecteur est positionné dans la première position et lorsque le sélecteur est positionné dans la deuxième position, et
- le moyen sélecteur (52) mobile est configuré pour être positionné dans au moins une troisième position dans lequel l'au moins une troisième ouverture fixe est ouverte.

6. Appareil selon la revendication 4 ou 5, dans lequel :
- ledit appareil comprend plusieurs collecteurs (4a, 4b) de grains pour des grains complètement torréfiés, et
- le dispositif de distribution (5) comprend plusieurs deuxièmes ouvertures fixes (512), chaque deuxième ouverture raccordant la chambre de torréfaction à un deuxième canal (41) dédié d'un collecteur de grains torréfiés dédié, et
- le moyen sélecteur (52) mobile est configuré pour être positionné dans plusieurs deuxièmes positions, dans lequel à chacune desdites deuxièmes positions, une seule des deuxièmes ouvertures fixes est ouverte (c'est-à-dire la première ouverture fixe et les autres deuxièmes ouvertures sont fermées).

7. Appareil selon l'une quelconque des revendications 4 à 6, dans lequel le dispositif de distribution (5) comprend :
- un corps fixe (51), ledit corps comprenant :
. la première ouverture fixe (511),
. l'au moins une deuxième ouverture fixe (512),
. facultativement au moins une troisième ouverture fixe (513),
et dans lequel le moyen sélecteur (52) mobile comprend un orifice (521), ledit orifice étant configuré pour coopérer avec la première, l'au moins une deuxième ou facultativement l'au moins une troisième ouverture respectivement lorsque le moyen sélecteur est déplacé dans la première, la deuxième ou la troisième position respectivement.

8. Appareil selon la revendication précédente, dans lequel le corps fixe (51) est la paroi supérieure de la chambre de torréfaction.

9. Appareil selon la revendication 7, dans lequel le corps fixe (51) est relié au sommet (12) de la chambre de torréfaction.

10. Appareil selon l'une quelconque des revendications 7 à 9, dans lequel le premier canal (31), l'au moins un deuxième canal (41) et facultativement l'au moins un troisième canal (21) sont fixés au corps fixe (51).

11. Procédé permettant de torréfier des grains de café avec un appareil (10) selon l'une quelconque des revendications 1 à 10, dans lequel ledit procédé comprend les étapes consistant à :
- introduire des grains de café non torréfiés dans la chambre de torréfaction (1), puis
- ouvrir le premier canal (31), en particulier en positionnant un moyen sélecteur (52) dans une première position, dans lequel seule la première ouverture fixe (511) est ouverte, et actionner le dispositif d'entraînement d'écoulement d'air (13) et le dispositif de chauffage (14) pour torréfier les grains de café, puis
- à la fin de la torréfaction, ouvrir le deuxième canal (41), en particulier en déplaçant le moyen sélecteur (52) dans une deuxième position, dans lequel seule la deuxième ouverture fixe (512) est ouverte, et actionner le dispositif d'entraînement d'écoulement d'air (13) pour évacuer les grains vers l'au moins un collecteur (4) de grains.

12. Procédé selon la revendication précédente, dans lequel l'appareil (10) comprend un troisième canal (21), et pendant l'étape d'introduction de grains de café non torréfiés dans la chambre de torréfaction, ledit troisième canal (21) est ouvert, en particulier en déplaçant le moyen sélecteur (52) dans une troisième position.

13. Procédé selon la revendication 11 ou 12, dans lequel le dispositif d'entraînement d'écoulement d'air est actionné de sorte que l'écoulement d'air est plus bas pendant la torréfaction des grains que pendant l'évacuation des grains de torréfieur.

14. Procédé selon la revendication précédente, dans lequel, pendant la torréfaction des grains, l'écoulement d'air est ajusté pour empêcher des grains de s'écouler à travers le premier canal (31) et, pendant l'évacuation des grains, l'écoulement d'air est ajusté pour permettre aux grains de s'écouler à travers le deuxième canal (41).
